# FASCICULE DE BREVET EUROPEEN

(11) **EP 0 755 423 B1**
(45) Date de publication et mention de la délivrance du brevet: **21.04.1999**
(21) Numéro de dépôt: 96904128.4
(22) Date de dépôt: 13.02.1996
(51) Int. Cl.: C09J 5/02, C04B 37/00, H01F 27/26

(54) **PROCEDE DE COLLAGE DE PIECES EN MATERIAU FRITTE**
VERFAHREN ZUR VERKLEBUNG VON GESINTERTEN MATERIALTEILEN
METHOD FOR ADHERING SINTERED MATERIAL COMPONENTS

(30) Priorité: 15.02.1995 FR 9501721
(43) Date de publication de la demande: 29.01.1997
(73) Titulaire: SEXTANT AVIONIQUE, 78141 Velizy Villacoublay (FR)
(72) Inventeur: ALMERAS, Jean-Claude, F-92402 Courbevoie Cédex (FR); DEZORD, Jean-Bernard, F-92402 Courbevoie Cédex (FR)
(74) Mandataire: Guérin, Michel
(86) Numéro de dépôt international: FR9600229
(87) Numéro de publication internationale: WO9625467

(56) Documents cités:
- EP-A- 0 502 324
- US-A- 4 562 104
- US-A- 5 346 717

## Description

L'invention se situe dans le domaine des procédés d'assemblage par collage de matériaux poreux au moyen de colles. Elle est en particulier applicable à des noyaux pour bobines ou transformateurs par exemple pour alimentations électriques d'équipements embarqués à bord d'avion ou de satellite, et dont les noyaux sont en ferrite. Ces noyaux sont de façon connue destinés à augmenter la perméabilité magnétique locale au voisinage d'enroulements, typiquement des bobines ou transformateurs.

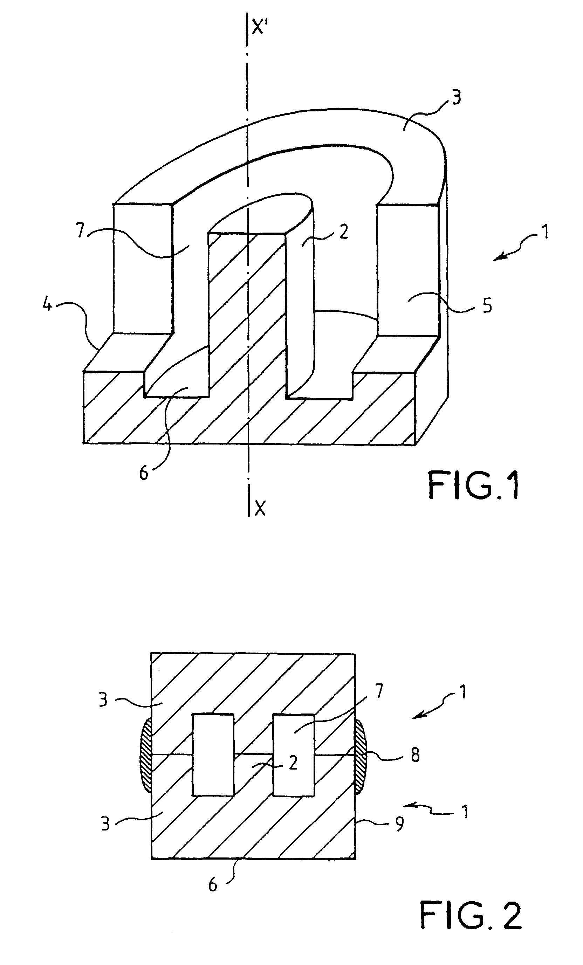

Un exemple de forme de ferrite utilisée pour de telles réalisations est représenté à titre indicatif figure 1. Cette figure représente une demi-vue en perspective.

La pièce 1 en ferrite représentée figure 1 comporte autour d'un axe de révolution XX', un noyau 2 central en forme de cylindre et une couronne périphérique 3 concentrique au noyau central. La couronne périphérique comporte deux ouvertures 4, 5 destinées à permettre le passage de fils constituant un enroulement non représenté. Le noyau central 2 et la couronne périphérique 3 sont joints par un fond 6. Un espace creux 7 entre le noyau central et la couronne périphérique permet l'insertion d'un bobinage. Lorsque le bobinage est en place, une seconde pièce en ferrite symétrique par rapport à un plan perpendiculaire à XX' de celle représentée est placée contre la pièce représentée figure 1. Le circuit magnétique du bobinage est alors complet et fermé.

Un procédé actuellement connu pour joindre les deux ferrites et réaliser ainsi l'assemblage de ce qui est appelé le "pot" est un procédé par collage au moyen d'une résine époxy par exemple de l'araldite (marque déposée de CIBA GEIGY).

Un cordon de colle est déposé entre les deux pièces à la périphérie extérieure de la couronne périphérique.

Un tel procédé donne globalement satisfaction à la fois du point de vue électrique, l'entrefer est assez petit, et du point de vue mécanique. L'assemblage est solide et réalisé de façon fiable.

Un tel assemblage présente cependant deux inconvénients principaux. D'une part il nécessite l'emploi d'une résine et d'un durcisseur, ce qui suppose une préparation préalable, et d'autre part il se traduit par la présence d'un cordon périphérique d'assemblage. Ce cordon constitue une boursouflure qui augmente le diamètre hors tout du pot. On augmente ainsi l'encombrement du gabarit d'insertion des pots, ce qui globalement augmente le volume et donc la masse des circuits dans lesquels les pots sont ensuite incorporés.

Afin de réduire l'encombrement de ces pots la Demanderesse a imaginé de remplacer le cordon de jonction extérieur en résine époxy par un collage des faces des deux parties du pot à assembler.

Il n'était pas possible d'utiliser pour ce collage des résines époxy, par exemple, car les films déposés sont trop épais et produisent des entrefers trop importants, supérieurs à 150 pm, ce qui nuit aux qualités électriques du circuit. Un procédé de collage au moyen d'une résine époxy est également décrit dans le brevet US-A-4 562 104 et un procédé de collage au moyen d'une colle acrylique est décrit dans la demande de brevet EP-A-0 502 324.

II se trouve que les adhésifs de type liquide anaérobies par exemple les colles de la série 600 produites par la Société Loctite produisent des films d'épaisseur convenable, typiquement de 50 à 100 µm. Il s'agit toutefois de colles anaérobies qui ne conviennent pas a priori pour des matériaux tels que des matériaux frittés qui de plus contiennent de l'oxygène tel que des ferrites de formule générale M F₂ O₄ ou M est un métal (par exemple Nickel, Manganèse ou Magnésium).

La Demanderesse a cependant procédé à des essais qui dans un premier temps ont donné satisfaction. Des problèmes de décollement sont cependant apparus. Une revue complète du procédé a permis de déterminer que ces décollements ne provenaient ni d'une mauvaise application ni d'un défaut de nettoyage des surfaces à coller.

Après d'autres essais la Demanderesse a conçu le procédé selon l'invention. Il s'agit d'un procédé simple, permettant d'assembler des matériaux poreux et/ou contenant de l'oxygène. Il s'agit d'un procédé dans lequel le film d'assemblage est compris entre 50 et 100 µm, ce qui pour des pots de ferrite permet de conserver de bonnes qualités au noyau. Il s'agit enfin d'un procédé ne nécessitant qu'un seul produit et qui d'après les essais, fournit un assemblage ayant une meilleure résistance à la traction que le procédé connu, en particulier après des cycles de vieillissement accéléré par variation rapide de température.

A toutes ces fins l'invention est relative à un procédé de collage d'une première pièce en matériau fritté à une seconde pièce, chacune des deux pièces ayant une surface d'assemblage, le procédé étant caractérisé en ce que le collage est réalisé au moyen d'une colle anaérobie à base de méthacrylate et comporte les étapes ci-après :
- on réalise au moins sur la surface d'assemblage de la pièce en matériau fritté, le dépôt d'un métal ;
- on dépose la colle anaérobie sur l'une au moins des surfaces d'assemblage ;
- on assemble et on laisse polymériser.

Selon une variante de l'invention, le dépôt de métal est réalisé par frottement d'une surface d'assemblage sur une pièce comportant une surface réalisée dans ledit métal.

Avantageusement, le métal peut être du cuivre, de l'acier, du laiton ou un alliage d'aluminium.

Selon une variante de l'invention, la pièce en matériau fritté est à base d'oxyde métallique.

Un exemple d'application du procédé sera ci-après décrit pour une pièce telle que celle représentée figure 1. Cette figure représente une vue perspective en coupe d'une pièce à assembler à une autre pièce semblable.

Des résultats d'essais seront ensuite donnés en faisant référence à la figure 2 qui représente une vue en coupe par un plan axial, de deux pièces selon la figure 1 assemblées selon l'art antérieur.

Un exemple d'application du procédé sera ci-après décrit en référence à la figure 1 déjà décrite. On rappelle qu'il s'agit d'une pièce en ferrite frittée.

Le collage effectué était relatif à deux pièces semblables, à assembler par un plan de joint perpendiculaire à l'axe de révolution des pièces. La surface d'assemblage consiste donc dans ce cas en une couronne circulaire 3 concentrique d'un plot circulaire central 2.
Après préparation ordinaire des surfaces, les faces d'assemblage ont été frottées manuellement sur une plaque de cuivre pendant une durée de deux secondes environ. Ce simple frottement suffit à provoquer un dépôt d'épaisseur négligeable sur les surfaces.

Le processus de collage est ensuite poursuivi selon la méthode habituelle pour ce type de colle. La colle employée a été la colle anaérobie à base de méthacrylate portant la référence 675 et vendue par la Société Loctite.

L'épaisseur de la jonction ainsi réalisée a été de 50 à 100 µm selon les échantillons.

Il a été ensuite procédé à des essais destinés à valider le collage. Il a tout d'abord été vérifié que le dépôt de cuivre opéré n'altérait pas les caractéristiques électriques des matériels réalisés avec des ferrites ainsi assemblées. Des essais mécaniques de traction ont ensuite été effectués pour comparer le procédé selon l'invention, d'une part au procédé connu, et d'autre part au même procédé mais ne comportant pas la phase de dépôt de cuivre. Les résultats obtenus sur des lots de l'ordre d'une dizaine de pièces sont les suivants.

Avec la colle Loctite 675 sans frottement préalable sur cuivre il a été constitué deux lots.

Sur un premier lot, seule la couronne circulaire extérieure a été enduite de colle, sur le second lot, la couronne extérieure 3 et le noyau central 2 ont été enduits.

Sur le premier lot, il a été constaté des forces de rupture du collage variables de 20 à 100 Newtons. Sur le second lot ces forces ont été de 72 à 167 Newtons. L'écart entre les deux a été attribué à la différence des surfaces encollées.

Par contre certaines pièces des deux lots n'ont pas participé aux essais car elles avaient été décollées sans effort par le simple fait d'être manipulées. Il est supposé que ces défauts de collage sont dus à des différences dans les lots de ferrites approvisionnées. L'analyse microscopique des états de surfaces a révélé des compositions atomiques et une granulation différentes selon les lots.

Il a été ensuite réalisé des essais sur des lots collés par les couronnes extérieures seulement et ayant reçu par un léger frottement un dépôt préalable de cuivre. Les forces de ruptures atteintes ont oscillé entre 111 Newtons pour la plus faible et plus de 180 Newtons pour les plus solides. (La machine de traction qui a été utilisée était limitée à 180 Newtons).

Ces premiers essais étant encourageants il a été procédé à des essais sur des pièces collées ayant subi un vieillissement accéléré au moyen de cycles de variation rapide de température. Sur un premier lot ayant subi 21 cycles , il a été observé une force moyenne de rupture de 142 Newtons, l'écart type étant de 19 Newtons. Sur un second lot ayant subi 57 cycles, la moyenne a été de 126 Newtons et l'écart type de 14 Newtons.

Afin de situer les performances ainsi obtenues par rapport au procédé connu, il a également été procédé à des essais de traction sur des pièces obtenues avec le procédé connu.

On rappelle que ce procédé consiste en un collage périphérique obtenu au moyen d'un cordon périphérique extérieur 8 (représenté figure 2) bicomposant.

Pour faciliter la compréhension une pièce réalisée par ce procédé a été représentée en coupe par un plan axial. On reconnaît sur cette pièce le plot central 2 et la couronne périphérique 3. L'assemblage est réalisé par dépôt d'un cordon de colle 8 sur la surface latérale extérieure 9 de chaque pièce 1, à peu près symétriquement par rapport au plan de joint. Le cordon 8 a une épaisseur d'environ 1 mm sur une longueur d'environ 3 mm. Comme expliqué plus haut ce cordon augmente sensiblement le gabarit hors tout de l'assemblage. Les résultats des essais effectués, sans vieillissement préalable, sur un lot, ont donné une moyenne de rupture de 127 Newtons pour un écart type de 12 Newtons. On constate donc que la qualité du collage est sensiblement inférieure à la qualité de collage obtenue par le procédé selon l'invention. (Moyenne 142 Newtons écart type 19).

A ce stade l'inventeur ne connaît pas le ou les phénomènes qui sont à la base de l'amélioration constatée.

Il pense à un effet favorable sur la polymérisation des méthylacrilates, à une meilleure mouillabilité de la couche créée par le dépôt ou encore à un effet de bouchage des porosités de la ferrite. Il est donc probable que d'autres métaux puissent convenir aussi bien que le cuivre. L'inventeur pense au bronze, au laiton, au béryllium, au cobalt, au fer, à l'acier, au nickel ou encore au manganèse cette liste n'étant pas limitative.

Si l'effet de bouchage était important il serait préférable de préparer les surfaces d'assemblage de chacune des pièces entrant dans l'assemblage. Dans le cas contraire le dépôt métallique sur une seule des deux surfaces pourrait suffire. Pour la Demanderesse le problème ne s'est pas posé, car pour ne pas avoir a apparier les pièces, une pièce ayant reçu le dépôt et une pièce ne l'ayant pas reçu, il est envisagé de préparer toutes les pièces participant à un assemblage en les vibrants sur une plaque de cuivre. Naturellement la forme métallique sur laquelle la pièce de ferrite est frottée doit de préférence avoir une surface, par exemple en creux, complémentaire de la surface d'assemblage de la pièce à assembler, si celle-ci est en relief.

Les inventeurs pensent que le procédé est applicable non seulement aux ferrites comme les essais réalisés l'ont montré mais aussi a tous les oxydes métalliques frittés que l'on n'envisageait pas jusqu'à présent de coller avec des colles anaérobies. La Demanderesse envisage en particulier les alumines frittés (AL₂ O₃) et de façon plus générale les céramiques frittées.

## Revendications

1. Procédé de collage d'une première pièce en matériau fritté à une seconde pièce, chacune des deux pièces ayant une surface d'assemblage, le procédé étant caractérisé en ce que le collage est réalisé au moyen d'une colle anaérobie à base de méthacrylate et comporte les étapes ci-après :
- on réalise au moins sur la surface d'assemblage de la pièce en matériau fritté, le dépôt d'un métal ;
- on dépose la colle anaérobie sur l'une au moins des surfaces d'assemblage ;
- on assemble et on laisse polymériser.

2. Procédé selon la revendication 1, dans lequel la première pièce en matériau fritté est à base d'oxyde métallique.

3. Procédé selon l'une des revendications 1 ou 2, dans lequel le dépôt de métal est réalisé par frottement d'une surface d'assemblage sur une pièce comportant une surface réalisée dans ledit métal.

4. Procédé selon l'une des revendications 1 à 3, dans lequel le métal est du cuivre.

5. Procédé selon l'une des revendications 1 à 3, dans lequel le métal est de l'acier ou du laiton ou un alliage d'aluminium.

## Patentansprüche

1. Verfahren zum Verkleben eines ersten Teils aus gesintertem Material mit einem zweiten Teil, wobei jedes der beiden Teile eine Verbindungsfläche besitzt, dadurch gekennzeichnet, daß das Verkleben mittels eines anaeroben Klebers auf Basis von Methacrylat durchgeführt wird und die folgenden Schritte umfaßt:
- es wird ein Metall mindestens auf der Verbindungsfläche des Teils aus gesintertem Material abgeschieden;
- der anaerobe Kleber wird auf mindestens eine der Verbindungsflächen aufgetragen;
- man fügt und läßt polymerisieren.

2. Verfahren nach Anspruch 1, bei dem das erste Teil aus gesintertem Material ein Teil auf Metalloxidbasis ist.

3. Verfahren nach einem der Ansprüche 1 oder 2, bei dem die Metallabscheidung durch Reiben einer Verbindungsfläche auf einem Werkstück durchgeführt wird, welches eine aus dem Metall hergestellte Oberfläche aufweist.

4. Verfahren nach einem der Ansprüche 1 bis 3, bei dem das Metall Kupfer ist.

5. Verfahren nach einem der Ansprüche 1 bis 3, bei dem das Metall Stahl oder Messing oder eine Aluminiumlegierung ist.

## Claims

1. Process for adhesively bonding a first piece made of sintered material to a second piece, each of the two pieces having an assembly surface, the process being characterized in that the adhesive bonding is carried out by means of a methacrylate-based anaerobic adhesive and comprises the following steps:
- the deposition of a metal is carried out at least on the assembly surface of the piece made of sintered material;
- the anaerobic adhesive is deposited on at least one of the assembly surfaces;
- the pieces are assembled and the adhesive allowed to cure.

2. Process according to Claim 1, in which the first piece made of sintered material is based on a metal oxide.

3. Process according to either of Claims 1 and 2, in which the metal deposition is carried out by rubbing an assembly surface against a piece having a surface made from the said metal.

4. Process according to one of Claims 1 to 3, in which the metal is copper.

5. Process according to one of Claims 1 to 3, in which the metal is steel or brass or an aluminium alloy.
